# EUROPÄISCHE PATENTANMELDUNG

(11) **EP 4 799 458 A1**
(43) Veröffentlichungstag der Anmeldung: **02.09.2026**
(21) Anmeldenummer: 26159509.4
(22) Anmeldetag: 19.02.2026
(51) Int. Cl.: A01C 17/00, A01C 15/04, A01C 23/00

(54) **AUSBRINGELEMENT EINER AUSBRINGVORRICHTUNG EINER LANDWIRTSCHAFTLICHEN UND/ODER KOMMUNALEN AUSBRINGMASCHINE**

(30) Priorität: 27.02.2025 DE 102025107581
(71) Anmelder: Amazonen-Werke H. Dreyer SE & Co. KG, 49205 Hasbergen (DE)
(72) Erfinder: Behnert, Dominik, 49205 Hasbergen-Gaste (DE)
(74) Vertreter: Heisel, Per-Christian

(57) **Zusammenfassung**

Ausbringelement (10) einer Ausbringvorrichtung (200) einer landwirtschaftlichen und/oder kommunalen Ausbringmaschine zum Ausbringen von Ausbringmaterial, umfassend: einen die Grundform des Ausbringelements (10) bildenden Grundkörper (24), einer sich an und/oder auf dem Grundkörper (24) befindenden Verschleißschutzschicht (30) zum Verringern und/oder Verhindern des durch einen Kontakt des Ausbringmaterials verursachten Materialabtrags am Ausbringelement (10), wobei sich an und/oder auf der Verschleißschutzschicht (30) eine Korrosionsschutzversiegelung (12) zum Verringern und/oder Verhindern der Korrosion der Verschleißschutzschicht (30) und/oder am Ausbringelement (10) befindet.

## Beschreibung

Die Erfindung betrifft ein Ausbringelement einer Ausbringvorrichtung einer landwirtschaftlichen und/oder kommunalen Ausbringmaschine zum Ausbringen von Ausbringmaterial nach dem Oberbegriff nach Anspruch 1, eine Ausbringvorrichtung nach dem Oberbegriff nach Anspruch 8 und ein Verfahren zum Herstellen eines Ausbringelements nach Anspruch 9.

Ausbringmaterial, wie beispielsweise Dünger, kann mittels Ausbringelementen auf landwirtschaftlichen Nutzflächen ausgebracht werden. Solche Ausbringelemente umfassen üblicherweise mehrere Bestandteile, wobei ein Grundkörper die Grundform des Ausbringelements bildet. Zum Verringern und/oder Verhindern des durch den Kontakt des Ausbringmaterials verursachten Materialabtrags am Ausbringelement befindet sich eine Verschleißschutzschicht an und/oder auf dem Grundkörper.

Beispielsweise werden in der Druckschrift DE 39 28 240 A1 eine Vorrichtung zum Ausbringen von Streugut und in der EP 0 716 979 A2 ein Gerät zum Ausbringen von Streugut beschrieben. Zudem wird in der Druckschrift EP 0 108 877 B1 ein Verfahren zum Auftragen von verschleißfesten Schichten auf den Arbeitsflächen von Werkzeugen und Vorrichtungen offenbart.

Die Verschleißschutzschicht eines Ausbringelements weist material- und/oder fertigungsbedingt üblicherweise Poren auf. Ausbringmaterial, wie beispielsweise Granulat oder Streusalz, weist aufgrund seiner chemischen Bestandteile üblicherweise korrosive Eigenschaften auf. Bei Kontakt des Ausbringmaterials mit der Verschleißschutzschicht kann Ausbringmaterial, beziehungsweise die chemischen Bestandteile des Ausbringmaterials, in die Poren der Verschleißschutzschicht eindringen. In der Folge kommt es, zumindest innerhalb der Poren, zu einer Korrosion der Verschleißschutzschicht. Diese Korrosion schreitet mit zunehmendem Alter der Verschleißschutzschicht, insbesondere aufgrund einer wiederholten Verwendung des Ausbringelements zum Ausbringen von Ausbringmaterial, fort und beeinflusst die Ausbringeigenschaften, insbesondere die erforderliche Oberflächenrauheit, des Ausbringelements negativ. Zudem führt eine fortschreitende Korrosion der Verschleißschutzschicht dazu, dass die Verschleißschutzschicht, zumindest bereichsweise, abgetragen wird und den Grundkörper somit nicht mehr vollständig schützen kann. In der Folge wird die Lebensdauer des Ausbringelements, insbesondere der Verschleißschutzschicht und/oder des Grundkörpers des Ausbringelements, verkürzt.

Die der Erfindung zugrunde liegende Aufgabe besteht somit darin, die Lebensdauer des Ausbringelements zu verlängern.

Die der Erfindung zugrunde liegende Aufgabe wird durch ein Ausbringelement der eingangs genannten Art gelöst, wobei sich an und/oder auf der Verschleißschutzschicht eine Korrosionsschutzversiegelung zum Verringern und/oder Verhindern der Korrosion der Verschleißschutzschicht und/oder am Ausbringelement befindet.

Die Verschleißschutzschicht schützt den Grundkörper vor Verschleiß und/oder reduziert den Verschleiß des Grundkörpers. Die Verschleißschutzschicht verhindert, dass das Ausbringmaterial während des Ausbringvorgangs direkten Kontakt mit dem Grundkörper hat. Die Verschleißschutzschicht verhindert folglich, dass eine Reibung zwischen dem Ausbringmaterial und dem Grundkörper hervorgerufen wird. Die Verschleißschutzschicht verhindert folglich auch, dass eine Erosion, insbesondere ein Abtragen, der Grundkörperoberfläche durch das Ausbringmaterial hervorgerufen wird.

Der Grundkörper kann beispielsweise als Wurfschaufelblech ausgebildet sein.

Die Verschleißschutzschicht ist eine thermisch aufgebrachte Spritzschicht. Die Verschleißschutzschicht kann bereichsweise auf dem Grundkörper befindlich sein oder den Grundkörper vollständig bedecken, beziehungsweise ummanteln.

Die Verschleißschutzschicht kann die die Oberflächenbeschaffenheit des Ausbringelements, insbesondere indirekt, beeinflussen. Die Verschleißschutzschicht weist eine, insbesondere spezifische, Porosität auf. Die Korrosionsschutzversiegelung ist dazu eingerichtet, die Verschleißschutzschicht und den Grundkörper des Ausbringelements vor Korrosion, insbesondere Spaltkorrosion, zu schützen und/oder die Korrosion, insbesondere Spaltkorrosion, der Verschleißschutzschicht und des Grundkörpers abzuschwächen. Die Korrosionsschutzversiegelung füllt und/oder benetzt die Poren der Verschleißschutzschicht und verhindert somit das Eindringen des Ausbringmaterials. Die Korrosionsschutzversiegelung ist in den Poren chemisch und mechanisch stabil. Die Korrosionsschutzversiegelung kann die Oberflächenrauheit des Ausbringelements beeinflussen, beziehungsweise definieren. Die Korrosionsschutzversiegelung reduziert oder erhöht die Oberflächenrauheit des Ausbringelements gegenüber dem Fall, dass an und/oder auf der Verschleißschutzschicht keine Korrosionsschutzversiegelung befindlich ist.

Die landwirtschaftliche Ausbringmaschine kann selbstfahrend oder mittels eines Fahrzeugs, beispielsweise eines Traktors, getragen oder gezogen werden. Die landwirtschaftliche Ausbringmaschine ist als Streumaschine, insbesondere Düngerstreuer, beispielsweise als Zentrifugaldüngerstreuer oder als pneumatischer Düngerstreuer, ausgebildet. Die kommunale Ausbringmaschine kann mittels eines Fahrzeugs, beispielsweise eines Traktors oder eines Kommunalfahrzeugs, getragen oder gezogen werden. Die kommunale Ausbringmaschine ist als Streumaschine, insbesondere Winterdienstmaschine, ausgebildet. Das Ausbringmaterial kann Dünger umfassen. Der Dünger kann ein mineralischer, organischer und/oder synthetischer Dünger sein. Das Ausbringmaterial kann Granulat umfassen. Das Ausbringmaterial kann Streugut, insbesondere Winterstreu sein. Das Streugut kann Streusand, Splitt, Kies, Streusalz, insbesondere Auftausalz und/oder Streugranulate umfassen.

Die Ausbringvorrichtung kann als Streuscheibe ausgebildet sein. Mittels der als Streuscheibe ausgebildeten Ausbringvorrichtung kann das, insbesondere als Streumaterial ausgebildete, Ausbringmaterial gestreut werden.

Die Grundform des Ausbringelements kann länglich sein. Der Grundkörper des Ausbringelements kann Metall, beispielsweise Edelstahl, umfassen. Der Grundkörper kann ein, insbesondere gebogenes oder geknicktes, Metallblech sein. Der Grundkörper kann einen Kunststoff und/oder Verbundwerkstoff umfassen. Der Grundkörper kann einteilig oder mehrteilig ausgebildet sein. Der Grundkörper kann eine Vertiefung, insbesondere Rille, und/oder Erhebung aufweisen. Das Ausbringelement weist eine spezifische, insbesondere anwendungsbezogene, Oberflächenbeschaffenheit, insbesondere Oberflächenrauheit, auf. Auf Grundlage der spezifischen Oberflächenbeschaffenheit wird gewährleistet, dass das Ausbringelement geeignete, insbesondere optimale, Ausbringeigenschaften für das Ausbringen von Ausbringmaterial aufweist. Die Oberflächenrauheit des Ausbringelements beeinflusst die Reibung, beispielsweise Haftreibung und/oder Gleitreibung, zwischen dem Ausbringelement und dem Ausbringmaterial. Das Ausbringelement weist eine oder mehrere Kontaktflächen auf, an welchen das Ausbringmaterial anliegen kann.

In einer weiteren bevorzugten Ausführungsform des erfindungsgemäßen Ausbringelements ist die Korrosionsschutzversiegelung hochtemperaturbeständig. Alternativ oder zusätzlich weist die Korrosionsschutzversiegelung ein Polymergemisch auf. Alternativ oder zusätzlich umfasst die Korrosionsschutzversiegelung ein Silikonharz. Alternativ oder zusätzlich ist die Korrosionsschutzversiegelung ein elektrischer Isolator. Die hochtemperaturbeständige Korrosionsschutzversiegelung kann kontinuierlichen Temperaturen bis zu 300°C, bevorzugt bis zu 400°C, besonders bevorzugt bis zu 500°C standhalten. Die hochtemperaturbeständige Korrosionsschutzversiegelung kann Spitzentemperaturen bis zu 500°C, bevorzugt bis zu 750°C, besonders bevorzugt bis zu 900°C standhalten. Ein Polymergemisch umfasst mehrere unterschiedliche Polymere. Die Gemischeigenschaften des Polymergemischs setzen sich zusammen aus den Polymereigenschaften der mehreren unterschiedlichen Polymere des Polymergemischs. Silikonharz kann vernetzte Polymethylsiloxane oder Polymethylphenylsiloxane umfassen. Die Korrosionsschutzversiegelung kann einen Silikonharzlack umfassen. Dadurch, dass die Korrosionsschutzversiegelung ein elektrischer Isolator ist, ist die elektrische Leitfähigkeit der Oberfläche des Ausbringelementes reduziert gegenüber dem Fall, dass die Korrosionsschutzversiegelung ein Leiter ist, oder, dass keine Korrosionsschutzversiegelung auf der Verschleißschutzschicht befindlich ist. Die Korrosionsschutzversiegelung weist einen spezifischen Widerstand von zumindest 10⁷ Ω·cm, bevorzugt zumindest 10⁹ Ω·cm, besonders bevorzugt 10¹² Ω·cm auf. Die Korrosionsschutzversiegelung kann eine erste und zweite Substanz umfassen. Die erste und zweite Substanz können voneinander abweichende Phasenübergangstemperaturen, insbesondere Schmelztemperaturen, aufweisen. Folglich können die erste und zweite Substanz in zumindest einem Zustand in voneinander abweichenden Aggregatzuständen vorliegen. Beispielsweise kann in einem Applikationszustand die erste Substanz flüssig und die zweite Substanz fest vorliegen.

In einer anderen bevorzugten Ausführungsform des erfindungsgemäßen Ausbringelements weist die Korrosionsschutzversiegelung in einem Applikationszustand fließfähige und feste Bestandteile auf. Alternativ oder zusätzlich weist die Korrosionsschutzversiegelung in einem Applikationszustand eine dynamische Viskosität von 3 bis 90 mPa·s, vorzugsweise 10 bis 75 mPa·s, besonders bevorzugt 25 bis 50 mPa·s auf.

In dem Applikationszustand ist die Korrosionsschutzversiegelung, insbesondere auf der Verschleißschutzschicht, auftragbar. In einem Festzustand ist die Korrosionsschutzversiegelung, insbesondere auf der Verschleißschutzschicht, nicht auftragbar. In dem Festzustand liegen sämtliche Bestandteile der Korrosionsschutzversiegelung fest vor. Während eines Aushärtungsvorgangs härtet die aufgetragene Korrosionsschutzversiegelung aus. Somit erfolgt während des Aushärtungsvorgangs ein Übergang von dem Applikationszustand in den Festzustand. In dem Applikationszustand weist die Korrosionsschutzversiegelung einen Anteil von zumindest 25 %, vorzugsweise zumindest 35 %, besonders bevorzugt zumindest 50 % feste Bestandteile auf.

Die Korrosionsschutzversiegelung ist in dem Applikationszustand hochkapillaraktiv. Dadurch, dass die Korrosionsschutzversiegelung in dem Applikationszustand hochkapillaraktiv ist, weist die Korrosionsschutzversiegelung ein vergleichsweise hohes Eindringverhalten in Poren auf. Aufgrund des hohen Eindringverhaltens in Poren kann die Korrosionsschutzversiegelung die innere Oberfläche der Poren vollständig auskleiden, beziehungsweise die Poren vollständig ausfüllen.

Dadurch, dass die Korrosionsschutzversiegelung in dem Applikationszustand eine dynamische Viskosität von 3 bis 90 mPa·s, vorzugsweise 10 bis 75 mPa·s, besonders bevorzugt 25 bis 50 mPa·s aufweist, ist die Korrosionsschutzversiegelung in dem Applikationszustand niedrigviskos. Dadurch, dass die Korrosionsschutzversiegelung in dem Applikationszustand niedrigviskos ist, weist die Korrosionsschutzversiegelung eine vergleichsweise hohe Fließfähigkeit auf. Die Korrosionsschutzversiegelung kann in einer von der Viskosität abhängigen Menge aufgebracht werden. Die Korrosionsschutzversiegelung kann in einer von der Oberflächenrauheit und/oder der mittleren Porengröße der Verschleißschutzschicht abhängigen Menge aufgebracht werden. Die erforderliche Viskosität ist abhängig von der erwarteten Oberflächenrauigkeit und/oder mittleren Porengröße. Die dynamische Viskosität der Korrosionsschutzversiegelung ist vorzugsweise derart gewählt, dass eine ausreichende Leichtgängigkeit des Versiegelungsmaterials gewährleistet wird, damit die Korrosionsschutzversiegelung die Poren der Verschleißschutzschicht ausreichend, insbesondere vollflächig, benetzt, beziehungsweise ausfüllt. Eine raue Oberfläche erfordert im Vergleich zu einer glatten Oberfläche eine verringerte Viskosität. Eine geringe Porengröße erfordert im Vergleich zu einer erhöhten Porengröße eine verringerte Viskosität.

Die Korrosionsschutzversiegelung kann ein Dichtmittel umfassen. Die Korrosionsschutzversiegelung kann aus einem Dichtmittel bestehen. Das Dichtmittel ist dazu eingerichtet, Lücken, Fugen, Spalten und/oder Poren abzudichten und/oder auszufüllen. Das Dichtmittel kann ein lösemittelbasierter Versiegler sein. Das Dichtmittel kann ein Polymergemisch sein. Das Dichtmittel kann wasserbasiert sein. Das Dichtmittel kann als Harz und/oder Härter ausgebildet sein. Das Dichtmittel kann ein, insbesondere hitzebeständiges, Imprägnierungssystem sein. Das Dichtmittel kann bei atmosphärischen Bedingungen auftragbar sein. Das Dichtmittel kann eine vergleichsweise hohe Druckdichtigkeit aufweisen. Das Dichtmittel kann ein 1- oder 2-Komponentensystem sein. Das Dichtmittel kann eine vergleichsweise hohe chemische Beständigkeit aufweisen. Das Dichtmittel kann in einem Applikationszustand eine dynamische Viskosität von 10 mPa·s bis 100 mPa·s, insbesondere 12 mPa·s, 35 mPa·s, 60 mPa·s oder 89 mPa·s, aufweisen. Alternativ kann das Dichtmittel in einem Applikationszustand eine dynamische Viskosität von 3 bis 6 mPa·s aufweisen.

In einer anderen bevorzugten Ausführungsform des erfindungsgemäßen Ausbringelements weist die Verschleißschutzschicht Poren auf und die Korrosionsschutzversiegelung bedeckt die Poren der Verschleißschutzschicht und/oder die Korrosionsschutzversiegelung ist innerhalb der Poren der Verschleißschutzschicht befindlich. Die Verschleißschutzschicht kann eine offene Porosität aufweisen. Die Verschleißschutzschicht kann, zumindest bereichsweise, eine Schaumstruktur aufweisen. Die Verschleißschutzschicht kann eine Porosität von 0,5 bis 30 %, vorzugsweise 0,5 bis 15 %, besonders bevorzugt 0,5 bis 5 % aufweisen. Die Verschleißschutzschicht kann Poren einer Porengröße von 0,1 bis 50 µm, bevorzugt 0,2 bis 25 µm, besonders bevorzugt 0,2 bis 10 µm aufweisen. Beim Auftragen der Verschleißschutzschicht auf den Grundkörper können die Poren der Verschleißschutzschicht aufgrund von Lufteinschlüssen während des Aushärtens der Verschleißschutzschicht und/oder im Zuge des thermischen Spritzprozesses entstehen. Mittels der Korrosionsschutzversiegelung werden die Poren der Verschleißschutzschicht, insbesondere luftdicht, versiegelt. Somit erfolgt bei einem Auftragen der Korrosionsschutzversiegelung an und/oder auf die Verschleißschutzschicht ein Imprägnieren der Verschleißschutzschicht. Aufgrund des Versiegelns der Poren wird beim Ausbringvorgang verhindert, dass Ausbringmaterial, beispielsweise Dünger oder Bestandteile des Düngers, in die Poren der Verschleißschutzschicht eindringt. Die Korrosionsschutzversiegelung benetzt die Poren der Verschleißschutzschicht oder füllt die Poren der Verschleißschutzschicht vollständig aus. Folglich schützt die Korrosionsschutzversiegelung die innere Oberfläche der Poren vor Luftkontakt und/oder vor Kontakt mit dem Ausbringmaterial, insbesondere vor den in dem Ausbringmaterial befindlichen Korrosionsbeschleunigern.

In einer besonders bevorzugten Ausführungsform des erfindungsgemäßen Ausbringelements ist die Korrosionsschutzversiegelung, zumindest bereichsweise, als Versiegelungsschicht ausgebildet. Die Versiegelungsschicht bedeckt, insbesondere vollflächig, die Verschleißschutzschicht. In einem Neuzustand des Ausbringelements ist die Korrosionsschutzversiegelung innerhalb der Poren der Verschleißschutzschicht und als Versiegelungsschicht auf der Verschleißschutzschicht befindlich. In einem Gebrauchtzustand des Ausbringelements ist die Korrosionsschutzversiegelung innerhalb der Poren der Verschleißschutzschicht befindlich. In dem Gebrauchtzustand des Ausbringelements weist die auf der Verschleißschutzschicht befindliche Versiegelungsschicht eine reduzierte Schichtdicke auf gegenüber dem Neuzustand des Ausbringelements. Alternativ ist in dem Gebrauchszustand des Ausbringelements die Verschleißschutzschicht frei von der Versiegelungsschicht. Die Schichtdicke der Versiegelungsschicht in einem Neuzustand des Ausbringelements und/oder einem Applikationszustand ist derart gewählt, dass die Poren der Verschleißschutzschicht ausreichend von der Korrosionsschutzversiegelung gefüllt werden. Folglich entspricht die Schichtdicke der Versiegelungsschicht maximal der Schichtdicke der Verschleißschutzschicht. Die Versiegelungsschicht kann eine Schichtdicke von 10 bis 500 µm, vorzugsweise 100 bis 500 µm, besonders bevorzugt 100 bis 250 µm aufweisen. Die Schichtdicke, beziehungsweise die Menge der aufzubringenden Korrosionsschutzversiegelung, kann in Abhängigkeit der Oberflächenrauheit und/oder der mittleren Porengröße der Verschleißschutzschicht gewählt werden. Die Versiegelungsschicht weist eine an das mittels des Ausbringelements auszubringenden Ausbringmaterials, insbesondere an die Art oder Konzentration des Korrosionsbeschleunigers des Ausbringmaterials, angepasste Schichtdicke auf. Beispielsweise kann die Versiegelungsschicht eine andere Schichtdicke aufweisen, wenn das Ausbringmaterial Dünger anstelle von Streusalz umfasst. Im Neuzustand des Ausbringelements weist die Versiegelungsschicht eine höhere Schichtdicke auf als im Gebrauchszustand des Ausbringelements.

In einer anderen bevorzugten Ausführungsform des erfindungsgemäßen Ausbringelementes ist das Ausbringelement als Wurfschaufel ausgebildet. Das als Wurfschaufel ausgebildete Ausbringelement weist eine schaufelförmige Grundform auf. Das Ausbringmaterial wird auf Grundlage einer Bewegung des als Wurfschaufel ausgebildeten Ausbringelements ausgebracht. Das Ausbringmaterial kann insbesondere streufähiges Ausbringmaterial, also Streumaterial, sein. Folglich kann die Wurfschaufel als Streuschaufel ausgebildet sein. Die Bewegung des als Wurfschaufel ausgebildeten Ausbringelements wird mittels eines Motors, insbesondere Elektromotors und/oder Hydraulikmotors, veranlasst. Der Elektromotor und/oder Hydraulikmotor ist Bestandteil der landwirtschaftlichen und/oder kommunalen Ausbringmaschine. Alternativ wird die Bewegung des Ausbringelements mittels einer Antriebswelle, Verteilergetrieben und Winkelgetrieben des Antriebs des Fahrzeugs, von dem die Ausbringmaschine gezogen oder getragen wird, veranlasst. In einem Ausbringvorgang wird das Ausbringmaterial mittels des in Bewegung versetzten Ausbringelements beschleunigt und auf Grundlage von Trägheit ausgebracht. Folglich kann das Ausbringmaterial in einer Wurfbahn geworfen und somit ausgebracht werden. Das als Wurfschaufel ausgebildete Ausbringelement ist dazu eingerichtet, die Bewegung von Ausbringmaterial zu führen. Das als Wurfschaufel ausgebildete Ausbringelement kann dazu eingerichtet sein, Ausbringmaterial, insbesondere temporär, aufzunehmen und abzugeben. Das als Wurfschaufel ausgebildete Ausbringelement kann einen, insbesondere als Vertiefung des Ausbringelements ausgebildeten, Aufnahmebereich aufweisen. Die Oberflächenbeschaffenheit des Ausbringelements kann die Wurfeigenschaften des Ausbringelements, insbesondere des als Wurfschaufel ausgebildeten Ausbringelements, beeinflussen. Die Bewegung des Ausbringelements umfasst eine Rotation. Alternativ oder zusätzlich kann die Bewegung des Ausbringelements eine Translation umfassen. Die Bewegung des Ausbringelements kann entlang einer Trajektorie, also Bahnkurve, erfolgen. Mittels eines Motors der landwirtschaftlichen und/oder kommunalen Ausbringmaschine kann das Ausbringelement in eine rotatorische Bewegung versetzt werden.

In einer Ausführungsform des erfindungsgemäßen Ausbringelements ist das Ausbringelement als Prallteller ausgebildet. Bei dem Ausbringvorgang kann das Ausbringmaterial mittels des als Prallteller ausgebildeten Ausbringelements gleichmäßig und/oder gezielt auf der landwirtschaftlichen Nutzfläche verteilt werden. Folglich kann eine gleichmäßige Bodenbedeckung mit dem Ausbringmaterial erfolgen. Wenn das Ausbringmaterial Dünger und/oder Granulat umfasst, so kann mittels des Pralltellers auf der landwirtschaftlichen Nutzfläche eine optimale Nährstoffversorgung für auf der landwirtschaftlichen Nutzfläche ausgebrachtes Saatgut und/oder den aus dem ausgebrachten Saatgut wachsenden Pflanzenbestand gewährleistet werden. Während des Ausbringvorgangs wird das Ausbringmaterial, beispielsweise pneumatisch bedingt, in Richtung des Pralltellers transportiert, insbesondere geschossen oder geschleudert. Das in Richtung des Pralltellers transportierte Ausbringmaterial trifft auf einer Kontaktfläche des Pralltellers auf und wird somit von seiner initialen Bahnkurve, beziehungsweise Bewegungsrichtung, abgelenkt. Das auf der Kontaktfläche des Pralltellers auftreffende Ausbringmaterial prallt insbesondere von der Kontaktfläche des Pralltellers ab. Das als Prallteller ausgebildete Ausbringelement ist innerhalb der Ausbringvorrichtung, insbesondere bei ausbringvorgangsspezifischer Kraftbeaufschlagung, bewegungsstarr ausgebildet. Das Ausbringelement ist derart bewegungsstarr ausgebildet, dass das Ausbringelement einen Ausbringvorgang durch den Kontakt mit dem Ausbringmaterial nicht in Bewegung versetzt wird. Der Prallteller kann in der Düngerausbringung oder Gülleausbringung eingesetzt werden. Folglich kann der Prallteller Bestandteil einer landwirtschaftlichen Gülleausbringmaschine sein. Beispielsweise kann der Prallteller Bestandteil eines Breitverteilers sein. Auf Grundlage des Pralltellers eines Breitverteilers wird Gülle, die während des Ausbringvorgangs an dem Prallteller abprallt, breitflächig auf der landwirtschaftlichen Nutzfläche verteilt. Alternativ kann der Prallteller Bestandteil eines Schleppschlauchverteilers oder Schleppschuhverteilers sein. Folglich kann der Prallteller bodennah ausgebildet, beziehungsweise angeordnet, sein. Der Prallteller kann in der Granulatausbringung eingesetzt werden. Folglich kann der Prallteller Bestandteil eines landwirtschaftlichen Düngerstreuers sein. Der Prallteller kann Bestandteil eines pneumatischen Düngerstreuers sein. Beispielsweise kann der Prallteller Bestandteil eines Gestänges eines pneumatischen Düngerstreuers sein. Es können mehrere Prallteller, insbesondere äquidistant, beabstandet an dem Gestänge angeordnet sein. Den Pralltellern kann Ausbringmaterial pneumatisch gefördert über eine Ausbringleitung zugeführt werden. Das pneumatisch geförderte Ausbringmaterial prallt auf den bzw. die Prallteller und wird so breitflächig auf der landwirtschaftlichen Nutzfläche verteilt.

Die der Erfindung zugrunde liegende Aufgabe wird ferner gelöst durch eine Ausbringvorrichtung der eingangs genannten Art, wobei das Ausbringelement nach einer der vorstehend beschriebenen Ausbringungsformen ausgebildet ist. Hinsichtlich der Vorteile und Modifikationen der erfindungsgemäßen Ausbringvorrichtung wird somit zunächst auf die Vorteile und Modifikationen des erfindungsgemäßen Ausbringelements verwiesen.

Dadurch, dass die Ausbringvorrichtung einen Scheibenkörper umfasst, kann die Ausbringvorrichtung als Streuscheibe ausgebildet sein. Der Scheibenkörper kann Metall und/oder einen Verbundwerkstoff umfassen. Der Scheibenkörper weist eine runde Grundform auf. Der Scheibenkörper kann eine Scheibenverschleißschutzschicht zum Verringern und/oder Verhindern des durch einen Kontakt des Ausbringmaterials verursachten Materialabtrags am Scheibenkörper aufweisen. An und/oder auf der Scheibenverschleißschutzschicht kann sich eine Scheibenkorrosionsschutzversiegelung zum Verringern und/oder Verhindern der Korrosion der Scheibenverschleißschutzschicht befinden. Das Ausbringelement kann gemeinsam mit dem Scheibenkörper bewegbar, insbesondere drehbar, angeordnet sein. Das auf dem Scheibenkörper aufgebrachte Ausbringmaterial kann mittels des Ausbringelements entlang der Scheibenkörperoberfläche bewegt, insbesondere geführt, werden. Das auf dem Scheibenkörper aufgebrachte Ausbringmaterial kann mittels des Ausbringelements in Richtung der Außenkante der Scheibenkörperoberfläche und über die Außenkante der Scheibenkörperoberfläche hinaus bewegt, insbesondere geführt, werden. Alternativ oder zusätzlich kann die Ausbringvorrichtung ein ausbringmaterialbeschleunigendes Bauteil, beispielsweise eine Rohrleitung, und/oder zumindest ein Abprallelement, beispielsweise Prallteller umfassen. Das Ausbringmaterial wird innerhalb der Rohrleitung in Richtung des Pralltellers beschleunigt und prallt von dem Prallteller ab.

Die der Erfindung zugrunde liegende Aufgabe wird ferner gelöst durch ein Verfahren der eingangs genannten Art mit dem Schritt: Auftragen einer Korrosionsschutzversiegelung auf die Verschleißschutzschicht. Zusätzlich kann das Verfahren den Schritt umfassen: Aushärten der auf der Verschleißschutzschicht aufgetragenen Korrosionsschutzversiegelung. Die Verschleißschutzschicht wird thermisch, insbesondere mittels eines Flammspritzverfahrens, auf den Grundkörper aufgebracht, insbesondere aufgespritzt. Die bei dem Flammspritzverfahren benötige Prozessenergie wird mittels eines Verbrennens eines Brenngases oder Kerosin-Sauerstoff-Gemisches zur Verfügung gestellt. Alternativ oder zusätzlich weist das Verfahren den Schritt auf: Abspülen der Verschleißschutzschicht mit Aceton. Das Aushärten der auf der Verschleißschutzschicht aufgetragenen Korrosionsschutzversiegelung erfolgt bei Raumtemperatur und/oder in einem Trocknungsofen. Das Aushärten der auf der Verschleißschutzschicht aufgetragenen Korrosionsschutzversiegelung erfolgt mittels eines Trocknens der Korrosionsschutzversiegelung. Die Korrosionsschutzversiegelung wird zumindest 12 Stunden, vorzugsweise zumindest 18 Stunden, besonders bevorzugt zumindest 22 Stunden getrocknet. Das Verfahren kann den zusätzlichen Schritt umfassen: Herstellen des Grundkörpers in einem Spritzgussverfahren.

In einer weiteren bevorzugten Ausführungsform des erfindungsgemäßen Verfahrens erfolgt das Auftragen der Korrosionsschutzversiegelung auf die Verschleißschutzschicht durch Einstreichen der Verschleißschutzschicht mit der Korrosionsschutzversiegelung, insbesondere mittels eines Streichwerkzeugs, und/oder Eintauchen des Grundkörpers samt der Verschleißschutzschicht in ein Korrosionsschutzversiegelungsmaterial, insbesondere in ein Tauchbad, und/oder Aufsprühen der Korrosionsschutzversiegelung auf die Verschleißschutzschicht. Das Einstreichen der Verschleißschutzschicht mit der Korrosionsschutzversiegelung stellt ein vollflächiges Bestreichen der Verschleißschutzschicht mit der Korrosionsschutzversiegelung dar. Das Einstreichen kann ein Bepinseln und/oder Betupfen umfassen. Das Streichwerkzeug kann als Pinsel, Streichbürste oder Beschichtungsrolle ausgebildet sein. Das Tauchbad ist mit der in einem Applikationszustand befindlichen Korrosionsschutzversiegelung gefüllt. Nach Entnahme des Grundkörpers samt der Verschleißschutzschicht aus dem Tauchbad ist die Verschleißschutzschicht von der, insbesondere in dem Applikationszustand befindlichen, Korrosionsschutzversiegelung benetzt. Das Tauchen kann einfach oder mehrfach erfolgen. Das Aufsprühen der Korrosionsschutzversiegelung auf die Verschleißschutzschicht kann ein Zerstäuben der Korrosionsschutzversiegelung umfassen. Das Zerstäuben kann mittels eines Zerstäubers erfolgen. Das Zerstäuben stellt das Zerteilen von Flüssigkeiten, Suspensionen und/oder Dispersionen in feine Tropfen dar. Der Zerstäuber kann einen oder mehrere Düsen umfassen. Der Zerstäuber kann als pneumatischer Zerstäuber ausgebildet sein. Das Aufsprühen der Korrosionsschutzversiegelung auf die Verschleißschutzschicht kann ein Lackieren umfassen. Nach dem Auftragen der Korrosionsschutzversiegelung auf die Verschleißschutzschicht kann ein Entfernen überschüssigen Korrosionsschutzversiegelungsmaterials erfolgen. Das Entfernen kann beispielsweise mittels Abtropfens und/oder Abstreifens erfolgen. Das Korrosionsschutzversiegelungsmaterial kann in einer derartigen Menge aufgetragen werden, dass ein Überschuss von maximal 15 %, vorzugsweise maximal 5 %, besonders bevorzugt maximal 0,5 % an Korrosionsschutzversiegelungsmaterial vorliegt. Der Überschuss bezeichnet die Menge des Korrosionsschutzversiegelungsmaterials, welches nach dem Auftragen des Korrosionsschutzversiegelungsmaterials auf die Verschleißschutzschicht, beziehungsweise dem Aushärten des Korrosionsschutzversiegelungsmaterials, an der Verschleißschutzschicht nicht haften bleibt, insbesondere nicht in den Poren der Verschleißschutzschicht verbleibt.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel einer erfindungsgemäßen Ausbringvorrichtung in einer perspektivischen Ansicht;
- Fig. 2: ein Ausführungsbeispiel eines Grundkörpers in einer Ansicht von oben;
- Fig. 3: den in der Fig. 2 gezeigten Grundkörper in einer Ansicht von unten;
- Fig. 4: ein Ausführungsbeispiel eines eine Verschleißschutzschicht aufweisenden Grundkörpers in einer Ansicht von oben;
- Fig. 5: ein Ausführungsbeispiel eines erfindungsgemäßen Ausbringelements in einer Ansicht von oben;
- Fig. 6: ein erfindungsgemäßes Verfahren zum Herstellen eines Ausbringelements;
- Fig. 7: die Verschleißschutzschicht sowie Korrosionsschutzversiegelung eines erfindungsgemäßen Ausbringelements in einer schematischen Schnittansicht; und
- Fig. 8: die Verschleißschutzschicht sowie Korrosionsschutzversiegelung eines weiteren erfindungsgemäßen Ausbringelements in einer schematischen Schnittansicht.

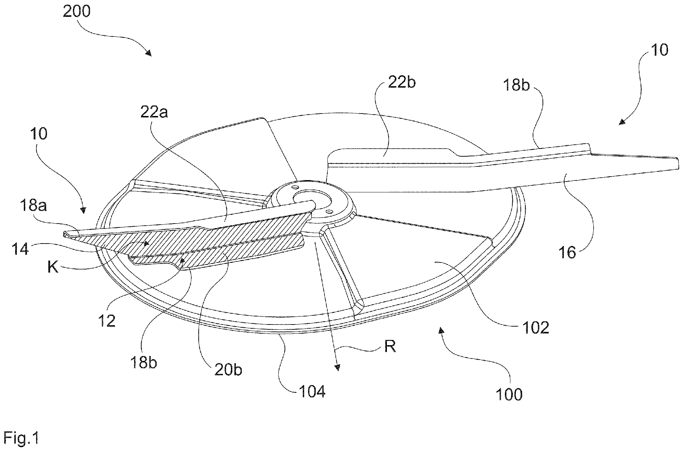

Die Fig. 1 zeigt die Ausbringvorrichtung 200, welche die zwei Ausbringelemente 10 und den Scheibenkörper 100 umfasst. Der Scheibenkörper 100 weist die Scheibenkörperoberfläche 102 auf. Die Ausbringelemente 10 umfassen jeweils die Korrosionsschutzversiegelung 12, die Ausbringelementvorderseite 14, die Ausbringelementrückseite 16, die erste und zweite Seitenwand 18a, 18b, den ersten und zweiten Seitenwandinnenbereich 20a, 20b und den ersten und zweiten Seitenwandaußenbereich 22a, 22b auf.

Der Scheibenkörper 100 ist aus Metall gefertigt. Mittels der Ausbringvorrichtung 200 wird Ausbringmaterial, insbesondere Granulat, auf einer landwirtschaftlichen Nutzfläche ausgebracht. Beim Ausbringvorgang wird Ausbringmaterial auf die Scheibenkörperoberfläche 102 aufgebracht. Die Ausbringelemente 10 sind gemeinsam mit dem Scheibenkörper 100 drehbar gelagert. Während des Ausbringvorgangs werden die Ausbringelemente 10 gemeinsam mit dem Scheibenkörper 100, insbesondere rotatorisch, bewegt. Das auf die Scheibenkörperoberfläche 102 aufgebrachte Ausbringmaterial wird somit von den Ausbringelementen 10, insbesondere temporär, aufgenommen und in Radialrichtung R zur Scheibenkörperaußenseite 104 hin, insbesondere aufgrund von Trägheit, beschleunigt. Die Scheibenkörperaußenseite 104 entspricht dem Außenumfang des Scheibenkörpers 100. Das mittels der Ausbringelemente 10 beschleunigte Ausbringmaterial wird über die Scheibenkörperaußenseite 104 hinaus bewegt und somit auf die landwirtschaftliche Nutzfläche geworfen, insbesondere auf der landwirtschaftlichen Nutzfläche ausgebracht.

Die Korrosionsschutzversiegelung 12 ist an der Ausbringelementvorderseite 14 des Ausbringelements 10 befindlich. Die Korrosionsschutzversiegelung 12 ist zudem an dem ersten und zweiten Seitenwandinnenbereich 20a, 20b befindlich. Die Ausbringelementrückseite 16 sowie der erste und zweite Seitenwandaußenbereich 22a, 22b sind jeweils frei von der Korrosionsschutzversiegelung 12. Die an der Ausbringelementvorderseite 14 sowie dem ersten und zweiten Seitenwandinnenbereich 20a, 20b befindliche Korrosionsschutzversiegelung 12 weist den Kontaktbereich K auf. Der Kontaktbereich K stellt denjenigen Bereich dar, in welchem das Ausbringmaterial während des Ausbringvorgangs mit dem Ausbringelement 10 in Kontakt kommt. Dadurch, dass das Ausbringmaterial im Ausbringvorgang vorzugsweise nicht mit der Ausbringelementrückseite 16 sowie dem ersten und zweiten Seitenwandaußenbereich 22a, 22b in Kontakt kommt, sind die Ausbringelementrückseite 16 sowie der erste und zweite Seitenwandaußenbereich 22a, 22b frei von der Korrosionsschutzversiegelung 12, insbesondere zur Kostenminimierung. Das Ausbringelement 10 weist eine schaufelförmige Grundform auf. Die schaufelförmige Grundform wird durch die flache Form der Ausbringelementvorderseite 14 und relativ zur Ausbringelementvorderseite 14 angewinkelte, insbesondere rechtwinklige, Ausrichtung des ersten und zweiten Seitenbandinnenbereichs 20a, 20b erzeugt. Die schaufelförmige Grundform wird durch den Grundkörper 24 definiert. Die erste und zweite Seitenwand 18a, 18b sind jeweils durch ein bereichsweises Umbiegen des Materials, in diesem Falle ein Metallblech, des Grundkörpers 24 gebildet.

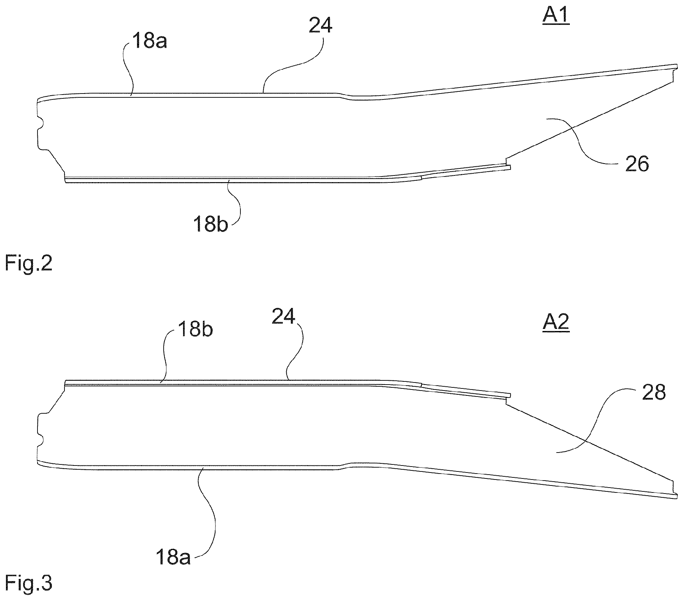

Die Fig. 2 zeigt in einer ersten Ansicht A1 den Grundkörper 24. Der Grundkörper 24 ist aus Metall gefertigt. Der Grundkörper 24 weist die erste und zweite Seitenwand 18a, 18b auf. Der Grundkörper 24 weist die Grundkörpervorderseite 26 auf. Die Grundkörpervorderseite 26 ist unbehandelt. Folglich ist die Grundkörpervorderseite 26 frei von jeglichen Schutzschichten. Die Grundkörpervorderseite 26 ist somit auch frei von Korrosionsschutzversiegelungen. Der Grundkörper 24 bildet eine Grundform. Die Grundform wird durch die Grundkörpervorderseite 26 sowie die erste und zweite Seitenwand 18a, 18b gebildet. Die Grundform stellt eine Wurfschaufelform dar. Der Grundkörper 24 ist aus einem Metallblech gebildet. Das Metallblech, aus welchem der Grundkörper 24 gebildet ist, weist geknickte Bereiche auf. Auf Grundlage dieser geknickten Bereiche wird der Grundkörper 24 in drei Bereiche unterteilt. Hierbei stellt die erste Seitenwand 18a einen ersten Bereich dar. Die Grundkörpervorderseite 26 stellt einen zweiten Bereich dar. Die zweite Seitenwand 18b stellt einen dritten Bereich dar.

Die Fig. 3 zeigt den Grundkörper 24, welcher in Fig. 2 dargestellt ist, in einer zweiten Ansicht A2. Der Grundkörper 24 weist die Grundkörperrückseite 28 auf. Die Grundkörperrückseite 28 ist unbehandelt. Folglich ist die Grundkörperrückseite 28 frei von jeglichen Schutzschichten und frei von einer Korrosionsschutzversiegelung.

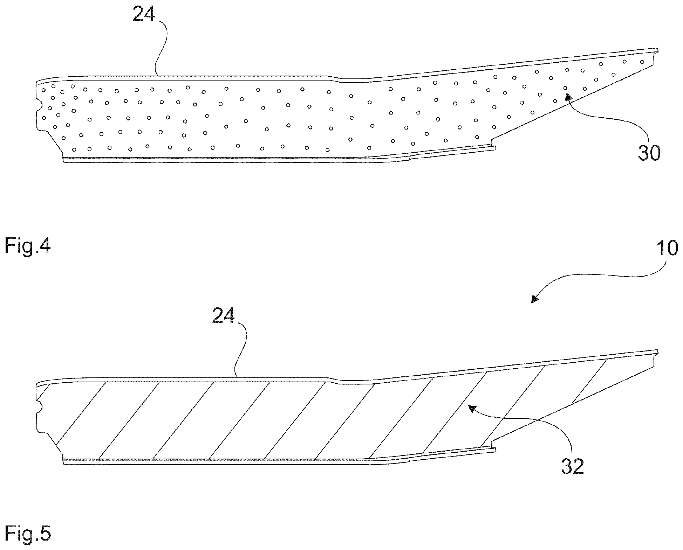

Die Fig. 4 zeigt den in der Fig. 2 dargestellten Grundkörper 24, wobei zusätzlich zu der Darstellung in der Fig. 2 auf der Grundkörpervorderseite 26 die Verschleißschutzschicht 30 flächig aufgebracht ist. Die Verschleißschutzschicht 30 ist dazu eingerichtet, in einem Ausbringvorgang den Grundkörper 24, insbesondere die Grundkörpervorderseite 26, vor Verschleiß zu schützen. Folglich wird die Grundkörpervorderseite 26 vor Materialabtrag geschützt.

Die Fig. 5 zeigt den die Verschleißschutzschicht 30 aufweisenden und in der Fig. 4 dargestellten Grundkörper 24, wobei zusätzlich zu der Darstellung in der Fig. 4 die Korrosionsschutzversiegelung 32 auf der Verschleißschutzschicht 30 aufgetragen ist. Die Korrosionsschutzversiegelung 32 ist flächig auf der Verschleißschutzschicht 30 aufgetragen. Zudem füllt die Korrosionsschutzversiegelung 32 die Poren der Verschleißschutzschicht 30 aus. Die Korrosionsschutzversiegelung 32 schützt die Verschleißschutzschicht 30 vor Korrosion, insbesondere vor Korrosion, welche durch Kontakt mit dem Ausbringmaterial hervorgerufen würde. Der Grundkörper 24 bildet gemeinsam mit der auf der Grundkörpervorderseite 26 befindlichen Verschleißschutzschicht 30 und der auf der Verschleißschutzschicht 30 befindlichen Korrosionsschutzversiegelung 32 das Ausbringelement 10. Die schaufelförmige Grundform des Ausbringelements 10 wird durch die Grundform des Grundkörpers 24 definiert.

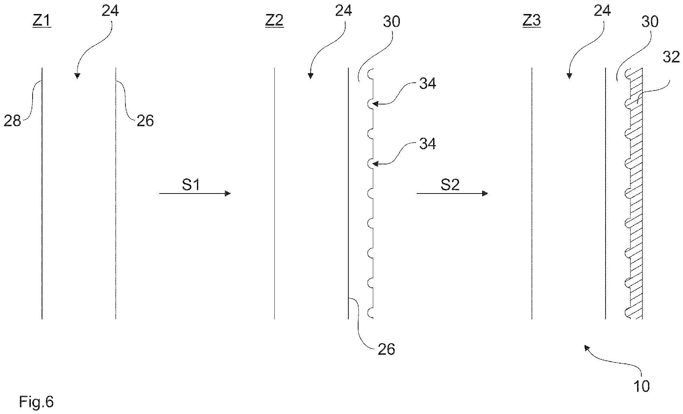

Die Fig. 6 zeigt ein Verfahren zum Herstellen eines Ausbringelements 10. In einem ersten Zustand Z1 liegen die Grundkörpervorderseite 26 sowie die Grundkörperrückseite 28 des Grundkörpers 24 jeweils unbehandelt vor. Folglich sind die Grundkörpervorderseite 26 sowie die Grundkörperrückseite 28 jeweils frei von Schutzschichten sowie Versiegelungen. In einem ersten Verfahrensschritt S1 wird eine Verschleißschutzschicht 30 auf der Grundkörpervorderseite 26 flächig aufgetragen. In dem zweiten Zustand Z2 erstreckt sich somit die Verschleißschutzschicht 30 entlang der Grundkörpervorderseite 26. Die Verschleißschutzschicht 30 wird durch ein porenbildendes Material gebildet. Folglich weist die Verschleißschutzschicht 30 die Poren 34 auf. Die Poren 34 haben, zumindest bereichsweise, Luftkontakt. Bei Kontakt der Verschleißschutzschicht 30 mit korrosivem Material, wie beispielsweise Ausbringmaterial, würde innerhalb der Poren 34 eine Korrosionswirkung hervorgerufen werden. Auf Grundlage dieser Korrosionswirkung würden die bei einem etwaigen Ausbringvorgang erforderlichen Oberflächeneigenschaften der Verschleißschutzschicht 30 negativ beeinflusst. In einem zweiten Verfahrensschritt S2 wird die Korrosionsschutzversiegelung 32 auf der Verschleißschutzschicht 30 und innerhalb der Poren 34 der Verschleißschutzschicht 30 aufgetragen. **In** dem dritten Zustand Z3 ist somit die Korrosionsschutzversiegelung 32 auf der Verschleißschutzschicht 30 angeordnet und füllt die Poren 34 der Verschleißschutzschicht 30 vollständig aus. Somit wird der Luftkontakt der Poren 34 sowie bei einem Ausbringvorgang der Kontakt der Poren 34 mit dem Ausbringmaterial verhindert. Somit wird die Korrosion der Verschleißschutzschicht 30, insbesondere der Oberfläche der Poren 34, verlangsamt, insbesondere verhindert. Der Grundkörper 24 bildet gemeinsam mit der auf dem Grundkörper 24 befindlichen Verschleißschutzschicht 30 sowie der auf der Verschleißschutzschicht 30 befindlichen Korrosionsschutzversiegelung 32 das Ausbringelement 10.

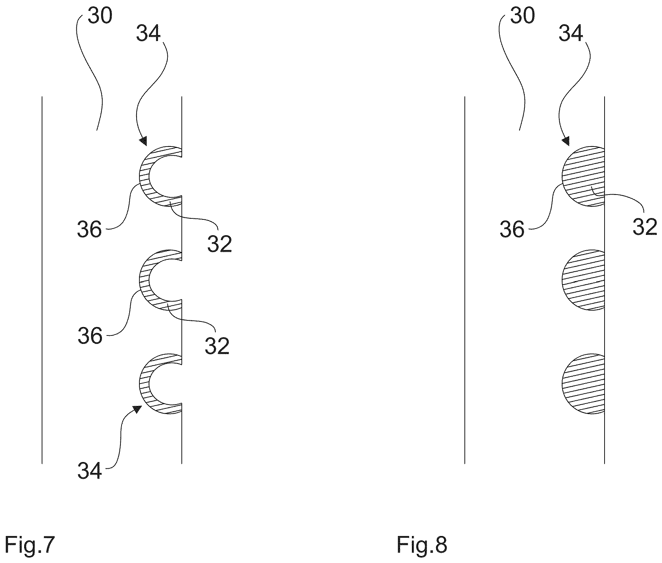

Die Fig. 7 zeigt die Verschleißschutzschicht 30 eines Ausbringelements 10. Die Porenoberflächen 36 der Poren 34 sind jeweils vollständig mit der Korrosionsschutzversiegelung 32 benetzt. Folglich wird die Korrosion der Porenoberflächen 36 effizient verhindert. Dadurch, dass die Porenoberflächen 36 nur mit der Korrosionsschutzversiegelung 32 benetzt sind, wird Korrosionsschutzversiegelungsmaterial eingespart gegenüber dem Fall, dass die Poren 34 vollständig mit der Korrosionsschutzversiegelung 32 gefüllt sind.

Die Fig. 8 zeigt die Verschleißschutzschicht 30, wobei die Poren 34 der Verschleißschutzschicht 30 jeweils vollständig mit der Korrosionsschutzversiegelung 32 ausgefüllt sind. Dadurch, dass die Poren 34 jeweils vollständig mit der Korrosionsschutzversiegelung 32 ausgeführt sind, verbleibt bei einem Ausbringvorgang das Ausbringmaterial, beziehungsweise korrosive Bestandteile des Ausbringmaterials, vollständig an der Oberfläche des Ausbringelements 10. Bei einem Ausbringvorgang kann das Ausbringmaterial, beziehungsweise korrosive Bestandteile des Ausbringmaterials, in keine Hohlräume des Ausbringelements 10, beziehungsweise der Verschleißschutzschicht 30, eindringen.

### Bezugszeichen

- 10: Ausbringelement
- 12: Korrosionsschutzversiegelung
- 14: Ausbringelementvorderseite
- 16: Ausbringelementrückseite
- 18a, 18b: Seitenwände
- 20a, 20b: Seitenwandinnenbereiche
- 22a, 22b: Seitenwandaußenbereiche
- 24: Grundkörper
- 26: Grundkörpervorderseite
- 28: Grundkörperrückseite
- 30: Verschleißschutzschicht
- 32: Korrosionsschutzversiegelung
- 34: Poren
- 36: Porenoberfläche

- 100: Scheibenkörper
- 102: Scheibenkörperoberfläche
- 104: Scheibenkörperaußenseite

- 200: Ausbringvorrichtung

- R: Radialrichtung
- K: Kontaktbereich

- A1: erste Ansicht
- A2: zweite Ansicht

- Z1-Z3: Zustand
- S1, S2: Verfahrensschritte

## Patentansprüche

1. Ausbringelement (10) einer Ausbringvorrichtung (200) einer landwirtschaftlichen und/oder kommunalen Ausbringmaschine zum Ausbringen von Ausbringmaterial, umfassend:
- einen die Grundform des Ausbringelements (10) bildenden Grundkörper (24);
- einer sich an und/oder auf dem Grundkörper (24) befindenden Verschleißschutzschicht (30) zum Verringern und/oder Verhindern des durch einen Kontakt des Ausbringmaterials verursachten Materialabtrags am Ausbringelement (10);
**dadurch gekennzeichnet, dass** sich an und/oder auf der Verschleißschutzschicht (30) eine Korrosionsschutzversiegelung (12) zum Verringern und/oder Verhindern der Korrosion der Verschleißschutzschicht (30) und/oder am Ausbringelement (10) befindet.

2. Ausbringelement (10) nach Anspruch 1,
**dadurch gekennzeichnet, dass** die Korrosionsschutzversiegelung (12)
- hochtemperaturbeständig ist; und/oder
- ein Polymergemisch aufweist; und/oder
- Silikonharz umfasst; und/oder
- ein elektrischer Isolator ist.

3. Ausbringelement (10) nach Anspruch 1 oder 2,
**dadurch gekennzeichnet, dass** die Korrosionsschutzversiegelung (12) in einem Applikationszustand
- fließfähige und feste Bestandteile aufweist; und/oder
- eine dynamische Viskosität von 3 bis 90 mPa·s, vorzugsweise 10 bis 75 mPa·s, besonders bevorzugt 25 bis 50 mPa·s aufweist.

4. Ausbringelement (10) nach einem der vorstehenden Ansprüche,
**dadurch gekennzeichnet, dass** die Verschleißschutzschicht (30) Poren (34) aufweist und die Korrosionsschutzversiegelung (12) die Poren (34) der Verschleißschutzschicht (30) bedeckt und/oder die Korrosionsschutzversiegelung (12) innerhalb der Poren (34) der Verschleißschutzschicht (30) befindlich ist.

5. Ausbringelement (10) nach einem der vorstehenden Ansprüche,
**dadurch gekennzeichnet, dass** die Korrosionsschutzversiegelung (12), zumindest bereichsweise, als Versiegelungsschicht ausgebildet ist.

6. Ausbringelement (10) nach einem der vorstehenden Ansprüche,
**dadurch gekennzeichnet, dass** das Ausbringelement (10) als Wurfschaufel ausgebildet ist.

7. Ausbringelement (10) nach einem der vorstehenden Ansprüche,
**dadurch gekennzeichnet, dass** das Ausbringelement (10) als Prallteller ausgebildet ist.

8. Ausbringvorrichtung (200) zum Ausbringen von Ausbringmaterial, mit
- einem Scheibenkörper (100), auf welchen das Ausbringmaterial aufgebbar ist;
- zumindest einem Ausbringelement (10) zum Führen des auf den Scheibenkörper (100) aufgegebenen Ausbringmaterials,
**dadurch gekennzeichnet, dass** das Ausbringelement (10) nach einem der vorstehenden Ansprüche ausgebildet ist.

9. Verfahren zum Herstellen eines Ausbringelements (10),
insbesondere eines Ausbringelements (10) nach einem der Ansprüche 1 bis 7, mit den Schritten:
- Bereitstellen eines Grundkörpers (24);
- Auftragen einer Verschleißschutzschicht (30) auf den Grundkörper (24),
**gekennzeichnet durch** den Schritt:
- Auftragen einer Korrosionsschutzversiegelung (12) auf die Verschleißschutzschicht (30).

10. Verfahren zum Herstellen eines Ausbringelements (10) nach Anspruch 9, **dadurch gekennzeichnet, dass** das Auftragen der Korrosionsschutzversiegelung (12) auf die Verschleißschutzschicht (30) durch
- Einstreichen der Verschleißschutzschicht (30) mit der Korrosionsschutzversiegelung (12), insbesondere mittels eines Streichwerkzeugs; und/oder
- Eintauchen des Grundkörpers (24) samt der Verschleißschutzschicht (30) in ein Korrosionsschutzversiegelungsmaterial, insbesondere in ein Tauchbad; und/oder
- Aufsprühen der Korrosionsschutzversiegelung (12) auf die Verschleißschutzschicht (30)
erfolgt.
